# EUROPEAN PATENT APPLICATION

(11) **EP 1 292 073 A1**
(43) Date of publication of application: **12.03.2003**
(21) Application number: 01121274.3
(22) Date of filing: 05.09.2001
(51) Int. Cl.: H04L 12/56, H04L 12/28

(54) **Method for connecting the access points of two wireless local area networks**

(71) Applicant: Z-Com, Inc., Hsinchu 300 (TW)
(72) Inventor: Sheng, Huang Chih, Hsinchu, 300 Taiwan (CN); Ou, Jui Long, Hsinchu, 300 Taiwan (CN); Shun, Jan Hsiao, Hsinchu, 300 Taiwan (CN)
(74) Representative: Betten & Resch

(57) **Abstract**

A signal propagation method is proposed for propagating a wireless signal from a first access point of a first wireless network to a second access point of a second wireless network comprising steps of providing a third access point for transmitting and receiving the wireless signal; transmitting the wireless signal from the first access point to the third access point; and transmitting the wireless signal form the third access point to the second access point.

## Description

### FIELD OF THE INVENTION

The present invention is related to a signal propagation method for wireless network, and more particularly to a signal propagation method utilizing a third access point as a wireless repeater to transmit wireless signal between a first access point and a second access point.

### BACKGROUND OF THE INVENTION

The LAN (Local Area Network) have developed to wireless LAN. Comparing to the traditional LAN, the wireless LAN have some advantages. For example, the wire allocation can be reduced, and a terminal equipment can be put into anywhere the wireless signal is reachable. In a wireless LAN, a portable computer ( for example a notebook) at each comer can easily connect to a host. The wireless environment is specially convenient to the portable computer. The portable computer will not be required a network line for the connection with the host. Therefore, the potential in future of wireless LAN will be better than the traditional LAN.

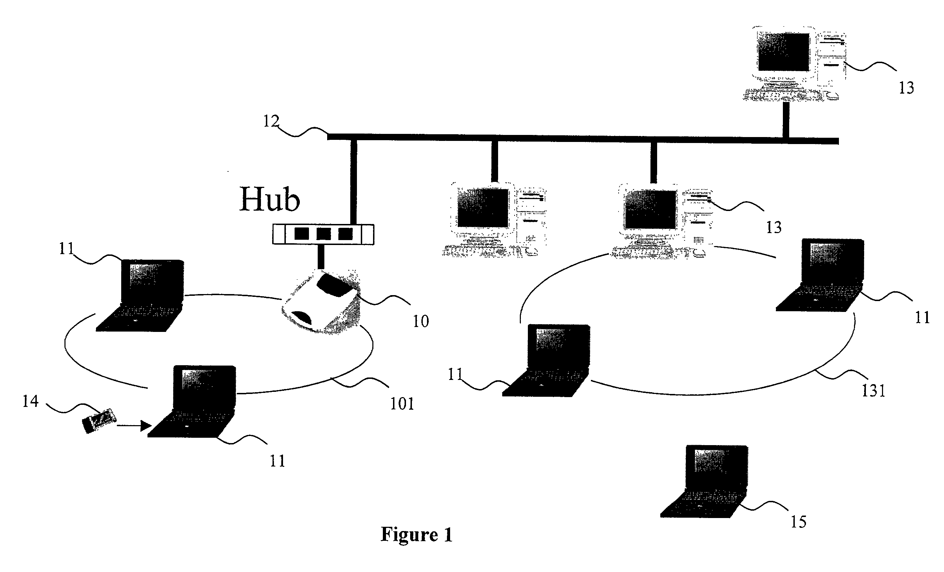

Fig. 1 shows the structure of the conventional wireless LAN. The conventional wireless LAN have several wireless client 11 which can communicate with other client 11 through an access point (AP) 10 or communicate with each host 13 in the traditional LAN through a hub. A wireless client 11 can also connect to the traditional LAN through a host 13, and further connect to an external network ( for example the internet). The allocation of each wireless client 11 haven't the constraint on the space where the wireless signal can reach, therefore the communication by wireless signal is more convenient than that by line transmission signal. In the aspect of hardware requirement, the user only need to construct an AP base station or add an AP interface on the host and add a wireless LAN card 14 on the wireless client 11, so that a client can easily connect to a host by wireless signal. In the signal distribution range 101 and 131, each wireless client can communicate with each host or other wireless client 11, but the wireless client 15 outside the signal distribution ranges can only operate independently and can't communicate with any host 13 or wireless client 11. The example of a wireless client 11 is a notebook computer here.

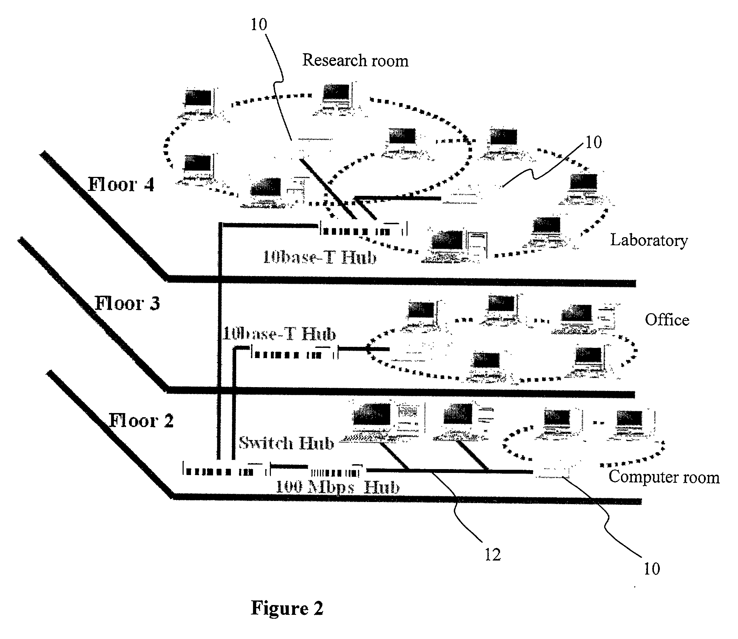

Fig. 2 shows an example of wireless LAN constructed in a four floors building. The floor 2 is a computer room having a wireless LAN; the floor 3 is an office also having a wireless LAN; and the floor 4 have two wireless LAN assigned to a research room and a laboratory respectively. Each computer in a wireless LAN can be connected by an access point 10 which is connected to the network line 12 and each computer of different wireless LAN can be connected by the network line 12 or a hub.

In the conventional wireless LAN, each access point may connect to a terminal client, the network line or a hub, but the communication between two access points of different wireless LAN must utilize the network line or the hub. That is, if there are two wireless LAN having several access points respectively, the access point of the first wireless LAN can't communicate with the access point of the second wireless LAN by wireless signal, and they can just only communicate by way of network line. Anyway, the allocation of network line among the access points is inconvenient.

### SUMMARY OF THE INVENTION

An object of the present invention is to provide an access point as a repeater for transmitting the wireless signal between other two access points.

Another object of the present invention is to provide a wireless repeater for simplifying the wire allocation in a large wireless LAN.

According to the present invention, a signal propagation method for propagating a wireless signal from a first access point of a first wireless network to a second access point of a second wireless network comprising steps of providing a third access point for transmitting and receiving the wireless signal; transmitting the wireless signal from the first access point to the third access point; and transmitting the wireless signal form the third access point to the second access point.

In accordance with one aspect of the present invention, both the first wireless network and the second wireless network are a wireless local area network (LAN).

In accordance with one aspect of the present invention, the wireless local area network includes the first access point, second access point and the third access point.

In accordance with one aspect of the present invention, the third access point operates steps of receiving a package of the wireless signal; reading a source address of the package; reading a destination address of the package; and sending the package from the first access point to the second access point provided the source address is correspondent to the first access point and the destination address is correspondent to the second access point.

In accordance with one aspect of the present invention, the third access point is a wireless repeater.

In accordance with one aspect of the present invention, the signal propagation method meet the requirements of IEEE802.11.

The present invention may best be understood through the following description with reference to the accompanying drawings, in which:

### BRIEF DESCRIPTION OF THE DRAWINGS

Fig. 1 is a conventional wireless LAN architecture diagram;
Fig. 2 is a conventional system schematic diagram showing an example of wireless LAN constructed in a four floors building;
Fig. 3 is a wireless LAN allocation schematic diagram according to the present invention; and
Fig. 4 is a flow chart using a repeater to transmit the wireless signal according to the present invention.

### DETAILED DESCRIPTION OF THE PREFERRED EMBODIMENT

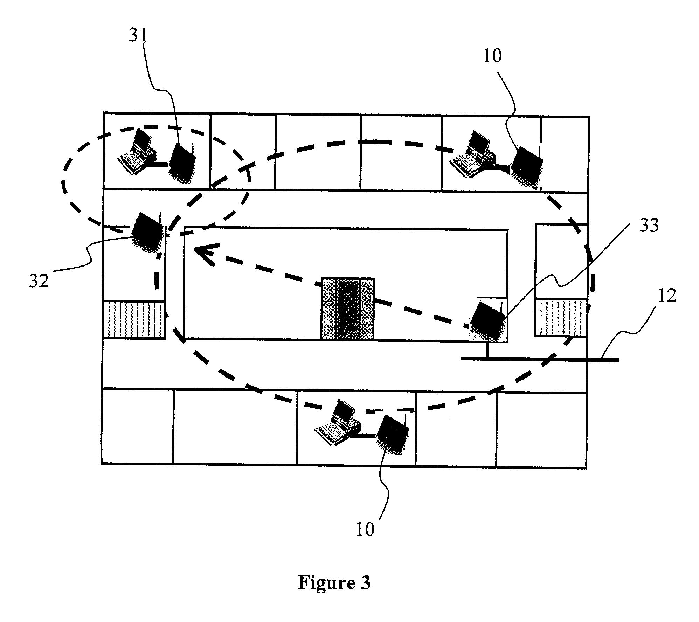

Please refer to Fig. 3 showing the system schematic diagram. The first access point 31 connects to a notebook and the second access point 33 connects to a network line 12. The third access point 32 is as a repeater for propagating the wireless signal between the first access point 31 and the second access point 33. Each notebook has an access point(10 or 31) for wireless communication with other notebook. Because the use of the repeater (thrid access point 32), the first access point 31 can directly transmit data to the second access point 33 by way of wireless communication. The wire allocation will be simplified and the construction of a wireless LAN will be efficient and flexible.

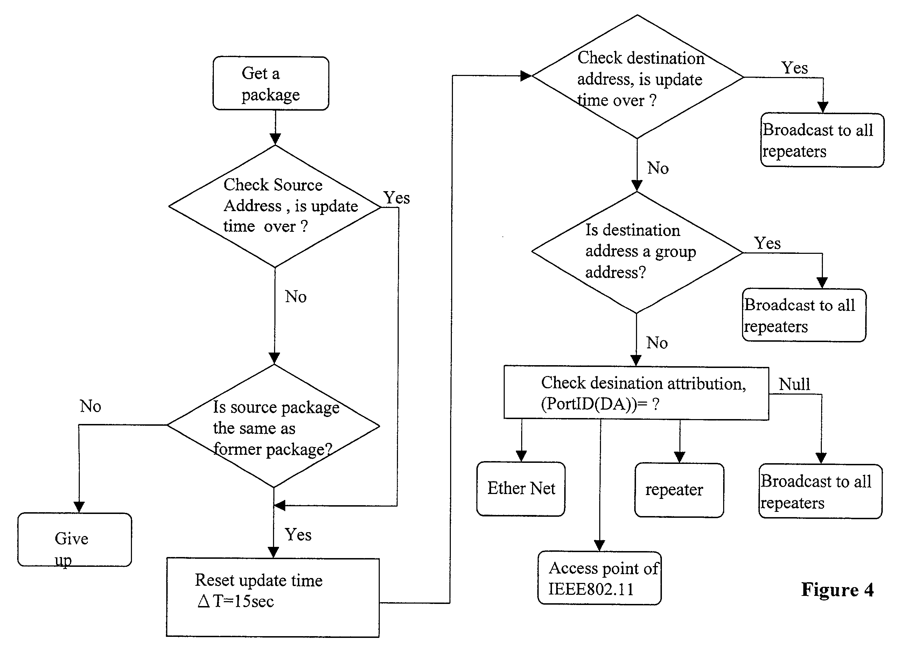

Please refer to Fig. 4 showing the flow chart using a repeater to transmit the wireless signal. First of all the repeater gets a package having a source address and a destination address. The source address may be correspondent to the first access point and the destination address may be correspondent to the second access point. The update time of the source path must be checked according the source address of the package. If the update time is over, the update time must be reseted again. If the update time is not over, the path of the package must be checked. If the path of the package is changed, the pacakge will be given up, i.e, the source of the package is not the same as that of the former package, so the package must be given up.

Secondly, the update time is reseted to 15 sec and the destination of the package is checked here. If the update time of the destination path is over, the package must be broadcasted to all repeaters. If the update time of the destination path is not over, the attribution of the destination address is checked. If the destination address is a group address, the package will be also broadcasted to all repeaters. If the destination address is not a group address, the destination is checked. The destination can be found with the instruction PortID(DA). The destination may be an ether-net, an access point according to IEEE802.11, a repeater or a null destination. The package will be propagated to the destination except the null destination. If the null destination is checked, the package will be also broadcasted to all repeaters.

For example of Fig. 3, the thrid access point 32 is as a repeater when the propagation between the first access point 31 and the second access point 33 is in process.

To utilize the repeater, each access point of different wireless LAN can easily communicate by way of wireless signal each other, and the allocation of network line will be simplified.

While the invention has been described in terms of what are presently considered to be the most practical and preferred embodiments, it is to be understood that the invention need not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A signal propagation method for propagating a wireless signal from a first access point of a first wireless network to a second access point of a second wireless network comprising steps of:
providing a third access point for transmitting and receiving said wireless signal;
transmitting said wireless signal from said first access point to said third access point; and
transmitting said wireless signal form said third access point to said second access point.

2. A signal propagation method according to Claim 1 wherein said first wireless network is a wireless local area network.

3. A signal propagation method according to Claim 1 wherein said second wireless network is a wireless local area network.

4. A signal propagation method according to Claim 1 wherein said third access point operates steps of:
receiving a package of said wireless signal;
reading a source address of said package;
reading a destination address of said package; and
sending said package from said first access point to said second access point provided said source address is correspondent to said first access point and said destination address is correspondent to said second access point.

5. A signal propagation method according to Claim 1 wherein said third access point is a wireless repeater.

6. A signal propagation method according to Claim 1 wherein said signal propagation method meet said requirements of IEEE802.11.
